# EUROPÄISCHE PATENTSCHRIFT

(11) **EP 2 974 817 B1**
(45) Veröffentlichungstag und Bekanntmachung des Hinweises auf die Patenterteilung: **21.08.2019**
(21) Anmeldenummer: 15002082.4
(22) Anmeldetag: 14.07.2015
(51) Int. Cl.: B23C 5/06, B23C 5/18, B27G 13/00, B27G 13/08

(54) **ZERSPANUNGSWERKZEUG ZUM STIRNPLANFRÄSEN**
CUTTING TOOL FOR FLAT SURFACE MILLING
OUTIL DE COUPE POUR LE FRAISAGE DE SURFACES PLANES

(30) Priorität: 16.07.2014 DE 102014010436
(43) Veröffentlichungstag der Anmeldung: 20.01.2016
(73) Patentinhaber: Leitz GmbH & Co. KG, 73447 Oberkochen (DE)
(72) Erfinder: Häupl, Franz, AT - 4720 Neumarkt i. Hr. (AT); Schlosser, Robert, AT - 4741 Wendling (AT)
(74) Vertreter: Rehmann, Thorsten

(56) Entgegenhaltungen:
- EP-A1- 1 260 298
- EP-A1- 2 035 197
- EP-A1- 2 431 115
- DE-A1-102010 000 640
- JP-A- 2007 021 623

## Beschreibung

Die Erfindung betrifft ein Zerspanungswerkzeug zum Stirnplanfräsen von Werkstücken, insbesondere aus Holz, Holzwerkstoffen, Kunststoffen oder Nichteisenmetallen sowie Leichtbau- und Verbundwerkstoffe aus diesen Werkstoffen, gemäß dem Oberbegriff des unabhängigen Anspruchs 1.

Ein solches Zerspanwerkzeug ist beispielsweise aus der DE102010000640A1 bekannt.

Bei der zerspanenden Bearbeitung von Werkstoffen wird angestrebt, eine glatte Oberfläche zu erhalten, die nicht mehr nachbearbeitet werden muss. Für die Güte der Oberfläche ist die Geometrie der Schneiden des Bearbeitungswerkzeuges maßgeblich. Nach einer allgemein gültigen Definition wird die Geometrie einer Schneide, also die Geometrie der Schneidkante eines Schneidelementes, durch den Freiwinkel, den Keilwinkel und den Spanwinkel bestimmt. Diese drei Winkel werden in einer Ebene gemessen, die einen Punkt auf der Schneidkante besitzt und in diesem Punkt senkrecht zur Schneidkante liegt. Die Summe aus Freiwinkel, Keilwinkel und Spanwinkel ist grundsätzlich 90°.

Insbesondere bei der Bearbeitung von Holz ist zu beobachten, dass häufig bei der Zerspanung eine Vorspaltung eintritt. Wird der Span in Faserrichtung abgenommen, eilt der Schneide ein als Vorspaltung bezeichneter Riss voraus. Durch diese Vorspaltung wird die Bearbeitung erleichtert und die Standzeit des Werkzeugs erhöht, die sich einstellende Oberfläche ist jedoch relativ rau. Bei der Bearbeitung von Holzwerkstoffen kann es nach dem Trennen auch zu einem Wiederaufstellen der Fasern kommen, wodurch ebenfalls die Oberfläche aufgeraut ist.

Um trotzdem eine möglichst einwandfreie Oberfläche zu erhalten, muss die Schneide, also die Schneidkante des Schneidelementes eine geringe Schneidkantenverrundung und einen kleinen Keilwinkel aufweisen. Bei bestimmten Schneidenwerkstoffen darf ein bestimmter Keilwinkel aber nicht unterschritten werden. Bei einem zu geringen Keilwinkel stumpft die Schneidkante bereits bei Beginn der Bearbeitung ab oder bricht aus. Das hat zur Folge, dass sich die Verrundung der Schneide zunehmend erhöht, wodurch die geforderte Schnittgüte nicht mehr erreichbar ist. Dies führt dazu, dass zwischen der Größe der genannten Winkel ein Kompromiss anzustreben ist.

Ein besseres Zerspanungsergebnis kann durch eine Verkleinerung des Keilwinkels erzielt werden, weil dadurch ein größerer Spanwinkel und gegebenenfalls auch ein größerer Freiwinkel erzielbar ist. Gleichzeitig führt dies aber auch bei der Bearbeitung zur bereits erläuterten Gefahr erhöhter Schneidenausbrüche oder schnellerer Abstumpfung. Umgekehrt verbessert eine Vergrößerung des Keilwinkels zwar die Standzeit, weil gleichzeitig aber der Spanwinkel und/oder der Freiwinkel verringert wird, verschlechtert sich das Zerspanungsergebnis. In diesen beiden gegenläufigen Tendenzen ist ein Kompromiss zu wählen, der nicht immer zufriedenstellend ist.

In der EP 2 484 471 B1 ist ein Zerspanungswerkzeug beschrieben, bei dem der Freiwinkel negativ ist, und gleichzeitig der Achswinkel und ein Einstellwinkel so aufeinander abgestimmt sind, dass sich ein effektiver Freiwinkel ergibt, der positiv ist. Dieses Zerspanungswerkzeug ist jedoch nicht zum Stirnplanfräsen geeignet, weil es keine stirnseitig wirkenden Schneiden aufweist.

Die EP 2 353 758 B1 offenbart ein Zerspanungswerkzeug zum Stirnplanfräsen von Werkstücken, insbesondere aus Holz, Holzwerkstoffen, Kunststoffen oder nicht Eisenmetallen sowie Leichtbau- und Verbundwerkstoffen aus diesen Werkstoffen, mit einem um eine Drehachse drehbaren Grundkörper und mindestens einer auf einem Umfang des Grundkörpers angeordneten Schneidenreihe, die mindestens zwei in einem Winkel zur Drehachse angeordnete Schneidelemente aufweist.

Die EP 1 260 298 A1 beschreibt ein Schneidwerkzeug mit austauschbaren Schneideinsätzen bei denen der radiale Spanwinkel der Hauptschneiden im Bereich von -5° bis -45° liegt. Angaben über den Keilwinkel der Nebenschneiden finden sich in diesem Dokument nicht. Das offenbarte Werkzeug ist ein typisches Fräswerkzeug für die Stahlzerspanung.

In der DE 39 24 714 A1 ist ein Werkzeug zur Formatierung von Holzplatten offenbart, das im Gleichlauf mit der Transportrichtung des Werkstücks läuft. Um eine längere Standzeit und eine bessere Oberflächenqualität der bearbeiteten Fläche zu erzielen, ist bei diesem Werkzeug vorgesehen, dass die Hauptschneiden in einer Kreiskegelfläche angeordnet sind, deren Spitzenwinkel zwischen 170° und 140° liegt, und dass die Drehachse des Werkzeugs in einem zugeordneten Achswinkel zwischen 5° und 20° zur Normalen der zu bearbeitenden Fläche und in einer Ebene etwa senkrecht zur Transportrichtung liegt, wobei die Drehachse des Werkzeuges in einem Zustellwinkel zwischen 0,5° und 1° zur Normalen der Transportebene verläuft.

Um beim Bearbeiten von leicht zerspanbaren Werkstoffen eine Minderung der Schallemission an einem Zerspanungswerkzeug mit einer umfangsseitigen Schneidzahnreihe zum Vorfräsen und einer stirnseitigen Zahnreihe zum Fertigfräsen zu erreichen, wird in der EP 0 883 472 B1 vorgeschlagen, die Rotationsflächen der Nebenschneiden beider Zahnreihen ineinander übergehen zu lassen, so dass die kombinierte Rotationsfläche gegenüber der senkrecht zur Rotationsachse liegenden Arbeitsebene Einstellwinkel bildet, die von radial außen nach radial innen stetig oder abschnittsweise abnehmen.

Holz und Holzwerkstoffe werden in der Regel im Gegenlauf bearbeitet. Im Gegenlauf bewirken positive Spanwinkel im Bereich des Schneidenaustritts oft Kantenausbrüche oder- ausrisse im Werkstück. Solche Kantenausbrüche können durch eine Bearbeitung im Gleichlauf vermieden werden, bei der die ausbruchgefährdete Werkstückkante beim Eintritt der Schneide bearbeitet wird und somit die Schnittkräfte in das Werkstück gerichtet sind. Zur Verstärkung dieses Effektes kommen teilweise auch geringfügig negative Spanwinkel zum Einsatz. Negative Spanwinkel haben den großen Nachteil, dass die Schnittkräfte deutlich erhöht werden, was eine stärkere Antriebsleistung für die Werkzeuge und größere Haltekräfte für die Werkstücke erfordert. Außerdem wird bei der Bearbeitung im Gleichlauf die Späneerfassung erschwert, weil die abgetrennten Späne in einer Hauptrichtung parallel zur bearbeiteten Werkstückfläche ausgeworfen werden und dann durch eine Auffangvorrichtung, beispielsweise eine Absaughaube, nur unzureichend erfasst werden können. Nicht von der Werkstückoberfläche entfernte Späne werden mitgerissen, unter Umständen nochmals zerspant und auf die Oberfläche des Werkstücks zurückgeschleudert, was eine glatte Oberfläche beeinträchtigt.

Von dieser Problemstellung ausgehend, liegt der Erfindung die Aufgabe zugrunde, die positiven Effekte eines negativen Spanwinkels, nämlich das Erzeugen von in das Werkstück hineingerichteten Druckkräften, zu nutzen, um ein Ausbrechen der Werkstückkante zu vermeiden, ohne dabei eine erhöhte Antriebsleistung für das Werkzeug zu erzeugen.

Die Problemlösung erfolgt bei einem gattungsgemäßen Zerspanungswerkzeug dadurch, dass ein Spanwinkel der Hauptschneide, gemessen an einem radial äußersten Punkt der Hauptschneide (6) und in der Werkzeug-Orthogonal-Ebene, die durch diesen Punkt verläuft, negativ mit einem Betrag von größer gleich 25° ist, insbesondere zwischen 30° und 40° ist. Die Werkzeug-Orthogonal-Ebene ist eine Ebene, die senkrecht zur Drehachse des Werkzeugs steht.

Durch diese Ausgestaltung ergibt sich an den spitzwinkligen Nebenschneiden ein stark ziehender Schnitt von radial innen nach radial außen, wodurch eine schlagartige Belastung der Schneiden und damit Schneidenausbrüche wirkungsvoll vermieden werden können. Der stark negative Spanwinkel bewirkt gleichsam, dass auch im Gegenlauf leichte Kräfte auf das bearbeitete Werkstück ausgeübt werden, wodurch Kantenausbrüche und/oder -ausrisse vermieden werden. Zusätzlich gehen mit dem kleinen Keilwinkel der oberflächenbildenden Nebenschneiden reduzierte Schnittkräfte einher. Dadurch können auch Werkstoffe ohne große Eigensteifigkeit, wie zum Beispiel Leichtbauwerkstoffe mit Schaum- oder Wabenstrukturen, deformationsfrei zerspant werden. Ein großer Achswinkel kann gleichzeitig bewirken, dass die Späne eine axiale, von der bearbeiteten Werkstückoberfläche weggerichtete Bewegungskomponente erfahren und somit seitlich aus der Arbeitsebene des Werkzeuges herausgefördert werden, wodurch die Späneerfassung begünstigt wird. Das erfindungsgemäße Zerspanungswerkzeug ist gleichermaßen für eine Bearbeitung im Gegenlauf und im Gleichlauf geeignet. Vorzugsweise ist zwischen der Hauptschneide und der Nebenschneide ein Übergangsbereich vorgesehen, der bogenförmig, insbesondere kreisbogenförmig ausgebildet sein kann, oder eine Fase ist.

Die Breite der Hauptschneide an dem radial äußersten Punkt der Hauptschneide kann auch gegen Null gehen. Auch dann existiert ein Spanwinkel, der in der Werkzeug-Orthogonal-Ebene, die durch diesen Punkt verläuft, gemessen werden kann.

Vorzugsweise ist jedem Schneidelement im Grundkörper ein Spanraum zugeordnet, der sich von dem Bereich der Nebenschneide bis zu dem Bereich der Hauptschneide durchgehend in einer schrägen Linie von stirnseitig radial innen nach radial außen erstreckt und umfangsseitig unter einem positiven Winkel austritt.

Um eine möglichst hohe Standzeit zu erreichen besteht das Schneidelement aus einem hochharten Werkstoff, der deutlich härter ist als der Werkstoff des Grundkörpers. Die Schneidkante, die aus Hauptschneide, Nebenschneide und einem dazwischen liegenden Übergangsbereich gebildet wird, kann dabei aus einem noch härteren Werkstoff als die übrigen Bereiche des Schneidelementes bestehen. Insbesondere vorzugsweise besteht die Schneidkante aus Diamant.

Es kann mindestens eine zweite umfangseitige Schneidenreihe vorgesehen sein, die umfangseitig wirkende Schneiden aufweist und sich hinsichtlich der Einbaulage der Schneidelemente von der ersten Schneidenreihe unterscheidet.

Das Profil, also die Kontur der stirnseitig wirkenden Schneiden der ersten Zahnreihe ist vorzugsweise zumindest annähernd rechtwinklig in das Profil, also die Kontur, der umfangseitig wirkenden Schneiden der zweiten Schneidenreihe übergehend ausgebildet. Eine solche Ausführungsform kann insbesondere als Falzfräser eingesetzt werden.

Um die Schnittkräfte zu senken, ist bei der mindestens zweiten Schneidenreihe ein positiver Spanwinkel vorgesehen.

Mit Hilfe einer Zeichnung sollen Ausführungsbeispiele der Erfindung nachfolgend näher erläutert werden.

Es zeigen:

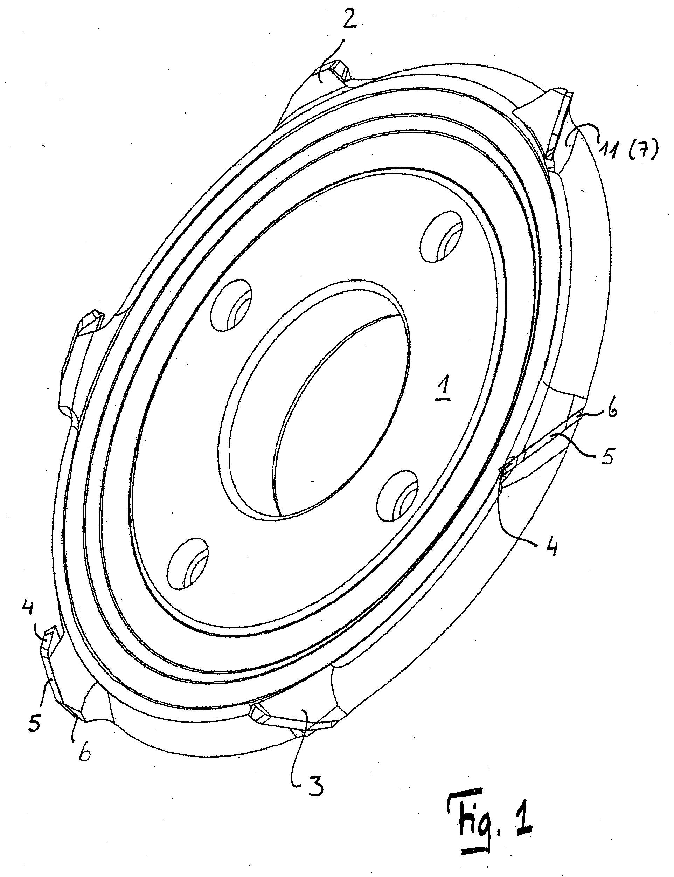

- Figur 1 -: ein erstes Ausführungsbeispiel eines erfindungsgemäßen Werkzeugs in perspektivischer Darstellung;

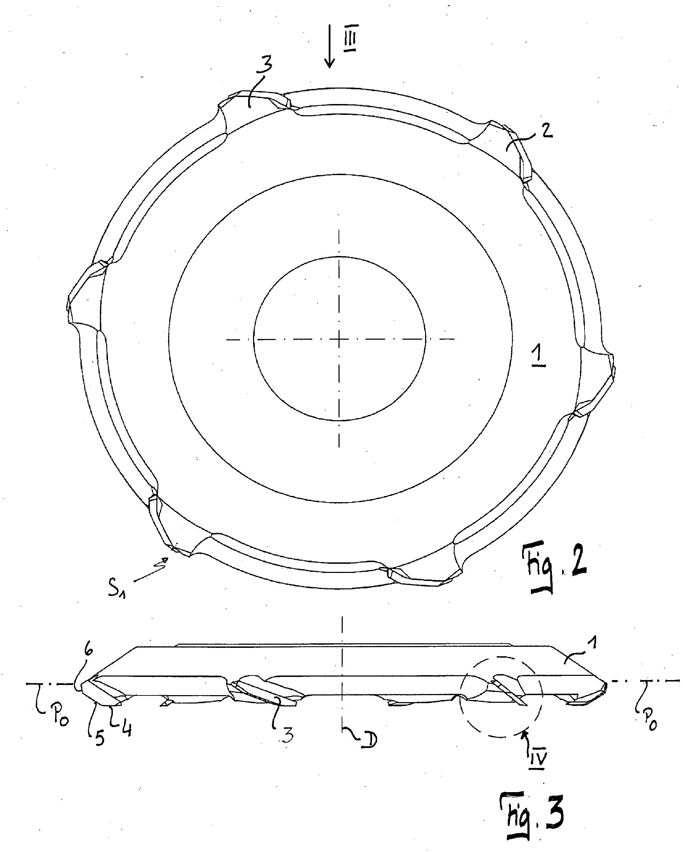

- Figur 2 -: die Ansicht des Werkzeugs nach Figur 1 von einem Bearbeitungsende des Werkzeugs aus entlang der Drehachse D gesehen;
- Figur 3 -: die Ansicht des Werkzeugs gemäß Sichtpfeil III aus Figur 2;
- Figur 4 -: die vergrößerte Detaildarstellung IV aus Figur 3;
- Figur 5 -: eine weitere Ansicht des Werkzeugs von einem Bearbeitungsende des Werkzeugs aus entlang der Drehachse D gesehen;
- Figur 6 -: die Ansicht des Werkzeugs gemäß Sichtpfeil VI in Figur 5;
- Figuren 7 bis 10: verschiedene Profilvarianten der Schneiden in vergrößerter Darstellung gemäß Ausschnitt VIII in Figur 6;
- Figur 11 -: die geometrische Abhängigkeit der Schneidenwinkel bei einem positiven Spanwinkel;
- Figur 12 -: die geometrische Abhängigkeit der Schneidenwinkel bei einem negativen Spanwinkel;
- Figur 13 -: ein weiteres Ausführungsbeispiel eines erfindungsgemäßen Werkzeugs mit einer weiteren Schneidenreihe in perspektivischer Darstellung;
- Figur 14 -: die Ansicht des Werkzeugs nach Figur 13 von einem Bearbeitungsende des Werkzeugs aus entlang der Drehachse D gesehen;

- Figur 15 -: die Ansicht des Werkzeugs gemäß Sichtpfeil XV aus Figur 14.
- Figur 16 -: eine weitere Ansicht des Werkzeugs des ersten Ausführungsbeispiels;
- Figur 17 -: die Ansicht des Werkzeugs gemäß Sichtpfeil XVII in Figur 16;
- Figuren 18 bis 21 -: die Darstellungen nach Figuren 7 bis 10 mit weiteren Erläuterungen.

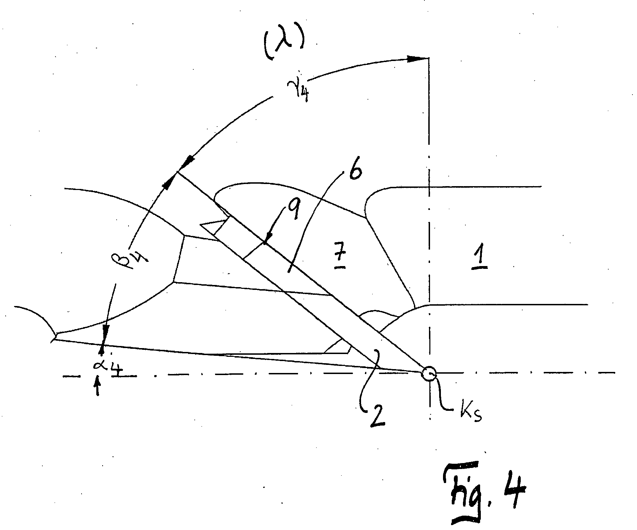

Das um die Drehachse D drehbare Zerspanungswerkzeug besteht aus einem scheibenförmigen Grundkörper 1 mit einer Schneidenreihe S₁, die in dem Ausführungsbeispiel aus sechs über den Umfang regelmäßig verteilt angeordneten Schneidelementen 2, 3 besteht, die - entlang der Spanfläche der Schneidelemente 2, 3 betrachtet - in einem Winkel λ angeordnet sind. Wie Figur 4 zeigt, fällt der Winkel λ, zusammen mit dem Spanwinkel γ₄ der Nebenschneide 4, wenn er entlang der Spanfläche 9 und der Drehachse D betrachtet wird. Da die Schneiden der Schneidelemente 2, 3 nicht achsparallel verlaufen, verändert sich der Spanwinkel γ über die Länge

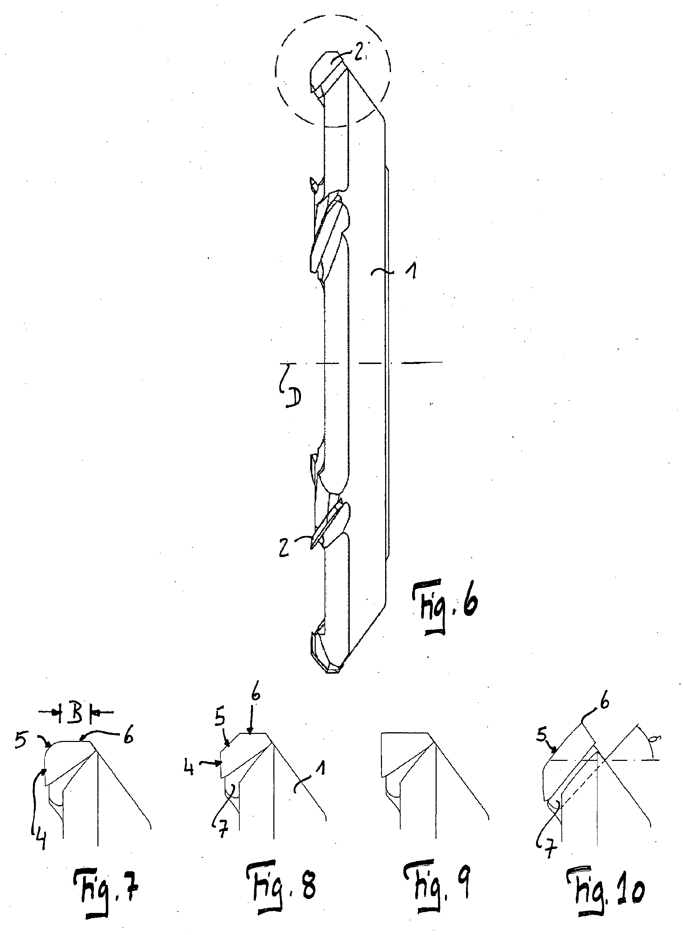

Jedes Schneidelement 2, 3 ist mit einer stirnseitig wirkenden Nebenschneide 4 und einer umfangseitig wirkenden Hauptschneide 6 versehen (vgl. Figur 8). Die Nebenschneide 4, die Hauptschneide 6 und der zwischen diesen beiden Schneiden 4, 6 liegende Übergangsbereich 5 bilden zusammen die Schneidkante jedes Schneidelements 2, 3. Jedem Schneidelement 2, 3 ist im Grundkörper 1 ein Spanraum 7 zugeordnet, der sich von dem Bereich der stirnseitigen Nebenschneide 4 bis zu dem Bereich der umfangsseitigen Hauptschneide 6 durchgehend in einer schrägen Linie von stirnseitig radial innen nach radial außen erstreckt. Umfangseitig tritt der Spanraum 7 unter einem positiven Winkel δ aus dem Grundkörper 1 aus.

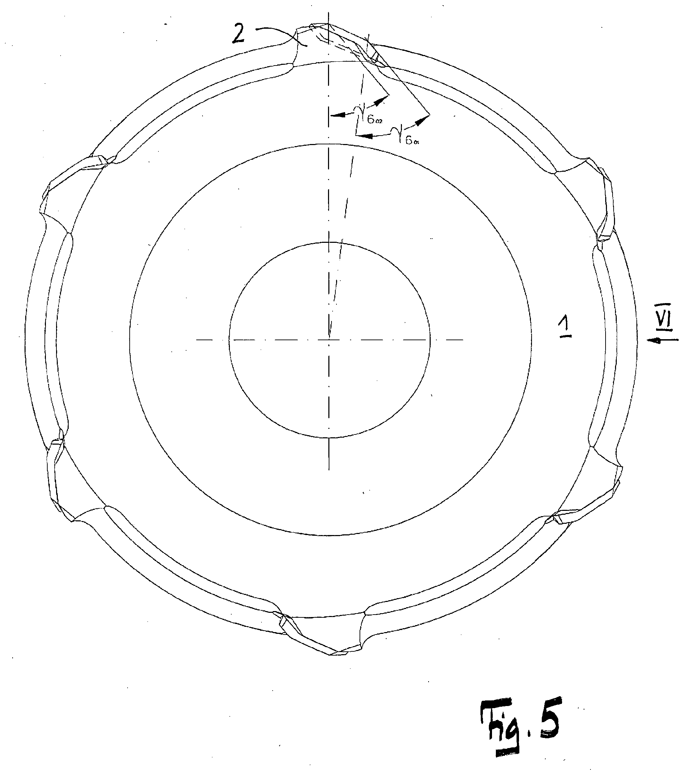

Der Keilwinkel β₄ der Nebenschneide 4 ist in einer Ebene senkrecht zur Schneidkante Ks kleiner als 55° (vergleiche Figur 4). Der Spanwinkel γ_{6₀₂} der Hauptschneide 6 gemessen an einem radial äußersten Punkt der Hauptschneide 6 und in der Werkzeug-Orthogonal-Ebene Pₒ₂, die durch diesen Punkt verläuft, ist negativ mit einem Betrag von größer gleich 25°, vorzugsweise mit einem Betrag zwischen 30° und 40° (vergleiche Figur 5). Dadurch ergibt sich an den spitzwinkligen Nebenschneiden 4 ein stark ziehender Schnitt von radial innen nach radial außen, wodurch eine schlagartige Belastung der Schneidkanten und damit Schneidenausbrüche vermieden werden. Der stark negative Spanwinkel γ₆ₒ₂ der Hauptschneide 6 bewirkt gleichsam, dass auch im Gegenlauf leichte Druckkräfte auf das bearbeitete Werkstück ausgeübt werden, wodurch Kantenausbrüche und/oder Ausrisse vermieden werden. Mit dem kleinen Keilwinkel β₄ der Nebenschneide 4 gehen außerdem reduzierte Schnittkräfte einher. Wenn der Winkel λ ausreichend groß gewählt wird, ist es sichergestellt, dass die Späne eine axiale, von der bearbeitenden Werkstückoberfläche weggerichtete Bewegungskomponente erfahren und somit seitlich aus der Arbeitsebene des Werkzeugs befördert werden, wodurch die Späneerfassung begünstigt wird. Durch den schrägen Winkel δ wird auch im Gleichlauf eine nahezu vollständige Späneerfassung ermöglicht.

Wie die Figuren 7 bis 10 zeigen, ist zwischen der Nebenschneide 4 und der Hauptschneide 6 der Übergangsbereich 5 vorgesehen, der eine beliebige Kontur einnehmen kann. Der Übergangsbereich 5 kann bogenförmig, insbesondere kreisbogenförmig ausgestaltet sein (Figur 7) oder als Fase (Figur 8). Der Übergangsbereich 5 kann, wie Figur 9 zeigt, auch gegen Null tendieren. Er kann also beliebig klein sein. Durch den schräg von stirnseitig radial innen nach radial außen verlaufenden Grund 11 des Spanraumes 7 (Figur 10) wird auch im Gleichlauf eine nahezu vollständige Erfassung der Späne 12 ermöglicht. Eine derartige Spanraumausgestaltung führt gegenüber einem konventionell ausgeführten, also achsparallel verlaufenden Spanraumgrund 11 (λ = 0) zu einer deutlichen Lärmminderung von bis zu 10 dB (A), wie Versuche ergeben haben.

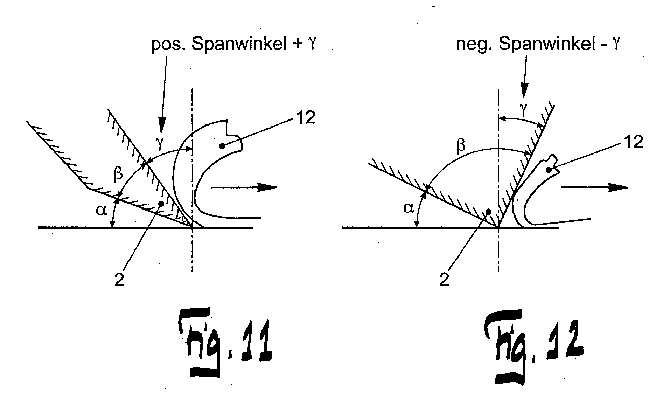

Den Figuren 11 und 12 ist die geometrische Abhängigkeit von Freiwinkel a, Keilwinkel β und Spanwinkel γ entnehmbar. Figur 11 zeigt einen positiven Spanwinkel und Figur 12 einen negativen Spanwinkel. Die Summe der Winkel α+β+γ beträgt grundsätzlich 90°.

Figur 4 zeigt das Verhältnis von Freiwinkel α₄, Keilwinkel β₄ und Spanwinkel γ₄ an der Nebenschneide 4. Die Schneidkante Ks erstreckt sich aus der Zeichenebene heraus. Der Spanwinkel γ₄ ist positiv und liegt vorzugsweise in einem Bereich zwischen 10° und 50°.

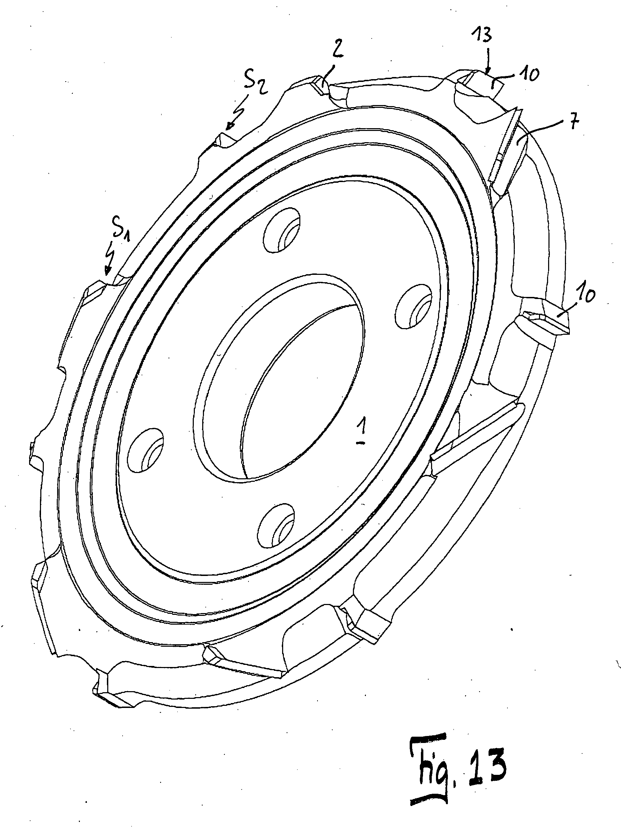

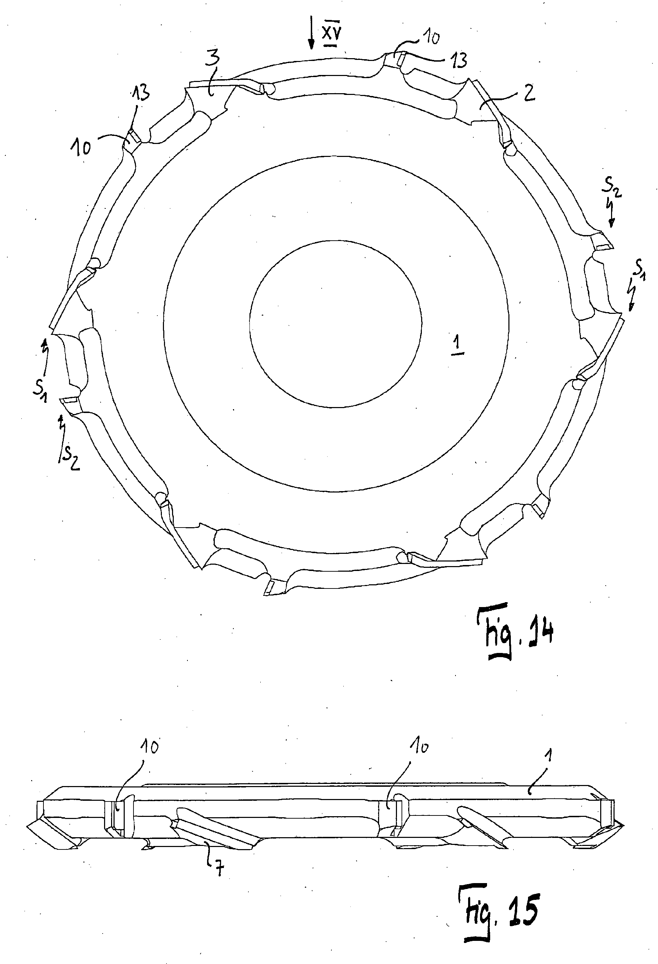

Die Figuren 13 bis 15 zeigen ein weiteres Ausführungsbeispiel eines erfindungsgemäß ausgestaltenen Zerspanungswerkzeuges, das neben der ersten Schneidenreihe S₁ eine weitere Schneidenreihe S₂ aufweist, deren mindestens zwei Schneidelemente 10 ausschließlich umfangsseitig wirkende Schneiden 13 besitzen. Um die Schnittkräfte zu senken, weisen die Schneiden 13 in der zweiten Schneidenreihe S₂ einen positiven Spanwinkel auf. Das Profil, also die Kontur der stirnseitig wirkenden Schneiden 4 der ersten Zahnreihe S₁ ist vorzugsweise zumindest annähernd rechtwinklig in das Profil, also die Kontur, der umfangsseitig wirkenden Schneiden 13 der zweiten Schneidenreihe S₂ übergehend ausgebildet. Eine solche Ausführungsform wird insbesondere als Falzfräser eingesetzt.

Zur Erläuterung der geometrischen Abhängigkeiten sei nachfolgend darauf hingewiesen, dass die Hauptschneide eines Zerspanungswerkzeuges immer in Vorschubrichtung arbeitet. Bei einem Fräswerkzeug bilden die Umfangsschneiden die Hauptschneiden, bei einem Bohrwerkzeug sind es die Stirnschneiden. Bei dem beschriebenen Zerspanungswerkzeug werden die Hauptschneide von der Umfangsschneide 6 und die Nebenschneide von der Stirnschneide 4 gebildet.

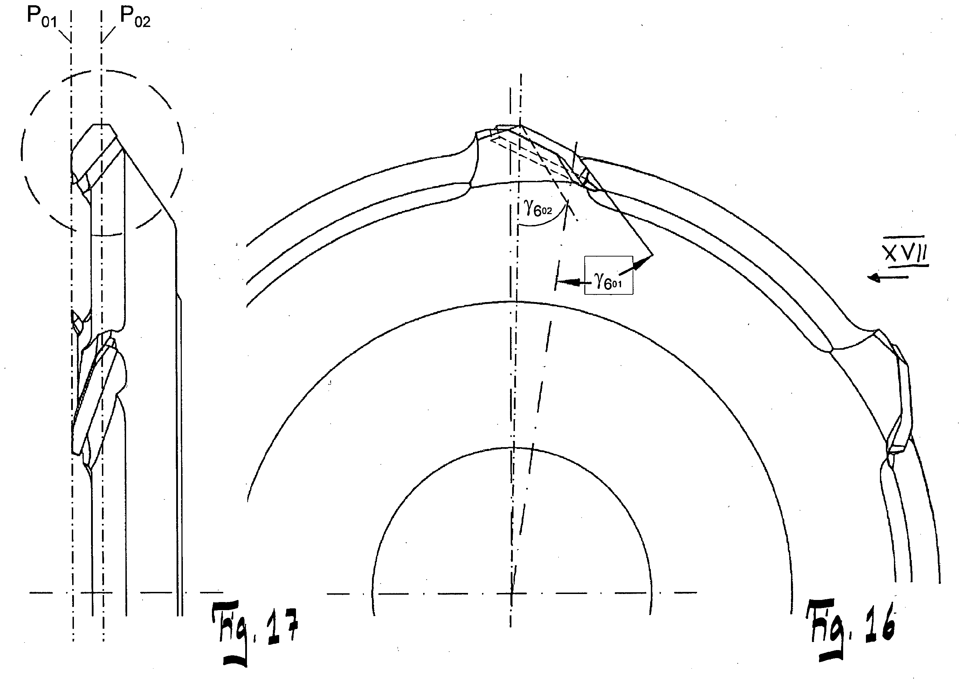

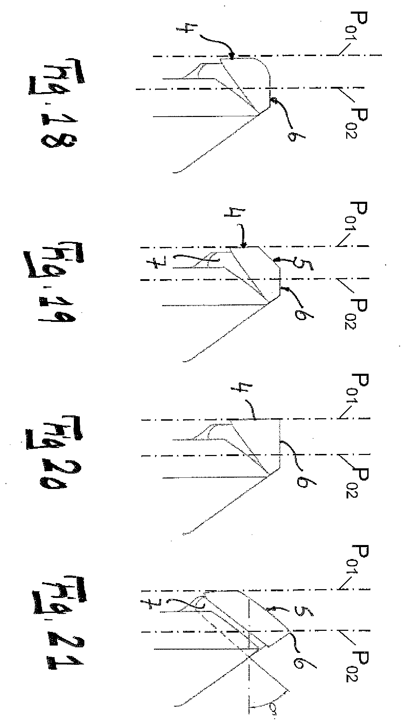

Zwischen der Hauptschneide und der Nebenschneide gibt es einen Übergangsbereich 5, der beliebig geformt sein kann. Dieser Übergangsbereich 5 ist in den Figuren 7 bis 10 bzw. 18 bis 21 gezeigt. Der Spanwinkel γ eines Werkzeuges wird als γ₀ in einer Werkzeug-Orthogonal-Ebene P₀ gemessen. In Anspruch 1 ist der Winkel γ₆₀₂ ein Spanwinkel der Hauptschneide 6, gemessen an einem radial äußersten Punkt der Hauptschneide 6 und in der Werkzeug-Orthogonal-Ebene P₀₂, die durch diesen Punkt verläuft. Da Figur 5 die Hauptschneide 6 von hinten zeigt, kann der Spanwinkel γ sinnvoll nur an der seitlich sichtbaren Nebenschneide 4 gezeigt werden. Wenn man die verdeckten Kanten des Schneidelementes 2 gestrichelt einzeichnet (vgl. Figur 16), kann man auch den Spanwinkel γ_{6₀₂} am radial äußersten Punkt der Hauptschneide 6 in derWerkzeug-Orthogonal-Ebene P₀₂ darstellen. Zur Verdeutlichung dieser Situation dienen die beiden in den Figuren 17 ff. eingezeichneten Werkzeug-Orthogonal-Ebenen P₀₁ und P₀₂. Die Orthogonal-Ebene P₀₁ geht durch die Nebenschneide 4, und die Orthogonal-Ebene P₀₂ ist durch die Hauptschneide 6 an den radial äußersten Punkt gelegt. Durch die Abfolge der Figuren 18 bis 21 wird ersichtlich, dass der Spanwinkel γ auch dann existiert, wenn die Breite der Hauptschneide 6 in diesem radial äußersten Punkt gegen Null geht (vgl. Figur 21).

### Bezugszeichenliste

- 1: Grundkörper
- 2: Schneidelement
- 3: Schneidelement
- 4: Nebenschneide
- 5: Übergangsbereich
- 6: Hauptschneide
- 7: Spanraum
- 9: Spanfläche
- 10: Schneideelement
- 11: Spanraumgrund
- 12: Span
- 13: Schneide
- B: Breite
- K_{S}: Schneidenlinie
- P_{O}: Werkzeug-Orthogonal-Ebene
- P₀₁: Werkzeug-Orthogonal-Ebene
- P₀₂: Werkzeug-Orthogonal-Ebene
- S₁: Schneidenreihe
- S₂: Schneidenreihe
- α: Freiwinkel
- β: Keilwinkel
- δ: Austrittswinkel
- γ: Spanwinkel
- λ: Winkel

## Patentansprüche

1. Zerspanungswerkzeug zum Stirnplanfräsen von Werkstücken, insbesondere aus Holz, Holzwerkstoffen, Kunststoffen oder Nichteisenmetallen sowie Leichtbau- und Verbundwerkstoffe aus diesen Werkstoffen, mit einem um eine Drehachse (D) drehbaren Grundkörper (1) und mindestens einer auf einem Umfang des Grundkörpers (1) angeordneten Schneidenreihe (S₁) die mindestens zwei, in einem Winkel (λ) zur Drehachse (D) angeordnete Schneidelemente (2, 3) mit einer stirnseitigen Nebenschneide (4) und einer umfangsseitigen Hauptschneide (6) aufweist, wobei ein Keilwinkel (β₄) der Nebenschneide (4) in einer Ebene senkrecht zur Schneidkante (K_{S}) der Nebenschneide (4) kleiner ist als 55°, **dadurch gekennzeichnet, dass** ein Spanwinkel (γ₆₀₂) der Hauptschneide (6), gemessen an einem radial äußersten Punkt der Hauptschneide (6) und in der Werkzeug-Orthogonal-Ebene (P_{O2}), die durch diesen Punkt verläuft, negativ mit einem Betrag von größer oder gleich 25° ist.

2. Zerspanungswerkzeug nach Anspruch 1, **dadurch gekennzeichnet, dass** zwischen Hauptschneide (6) und der Nebenschneide (4) ein Übergangsbereich (5) vorgesehen ist.

3. Zerspanungswerkzeug nach Anspruch 2, **dadurch gekennzeichnet, dass** der Übergangsbereich (5) bogenförmig, insbesondere kreisbogenförmig ausgebildet ist.

4. Zerspanungswerkzeug nach Anspruch 2, **dadurch gekennzeichnet, dass** der Übergangsbereich (5) eine Fase ist.

5. Zerspanungswerkzeug nach einem der vorstehenden Ansprüche, **dadurch gekennzeichnet, dass** die Breite (B) der Hauptschneide (6) an dem radial äußersten Punkt der Hauptschneide (6) gegen Null läuft.

6. Zerspanungswerkzeug nach einem der vorstehenden Ansprüche, **dadurch gekennzeichnet, dass** jedem Schneidelement (13) im Grundkörper (1) ein Spanraum (7) zugeordnet ist, der sich von dem Bereich der Nebenschneide (4) zu dem Bereich der Hauptschneide (6) durchgehend in einer schrägen Linie von stirnseitig radial innen nach radial außen erstreckt und umfangsseitig unter einem positiven Winkel (δ) austritt.

7. Zerspanungswerkzeug nach einem der vorstehenden Ansprüche, **dadurch gekennzeichnet, dass** die Schneidelemente (2, 3) aus einem hochharten Werkstoff bestehen, der härter ist als der Werkstoff des Grundkörpers (1).

8. Zerspanungswerkzeug nach Anspruch 7, **dadurch gekennzeichnet, dass** zumindest die aus Hauptschneide (6), Übergangsbereich (5) und Nebenschneide (4) gebildete Schneidkante aus einem härteren Werkstoff besteht als die übrigen Bereiche der Schneidelemente (2,3).

9. Zerspanungswerkzeug nach Anspruch 8, **dadurch gekennzeichnet, dass** die Schneidkante (4, 5, 6) aus Diamant besteht.

## Claims

1. Chipping tool for the end face milling of workpieces, in particular made of wood, wood-based materials, plastics or non-ferrous metals, and lightweight and composite materials made of these materials, having a main body (1) that is rotatable about an axis of rotation (D) and at least one row of cutters (S₁), arranged at a circumference of the main body (1), that has at least two cutting elements (2, 3), arranged at an angle (λ) to the axis of rotation (D), with an end-side secondary cutting edge (4) and a circumferential main cutting edge (6), wherein a wedge angle (β₄) of the secondary cutting edge (4) in a plane perpendicular to the cutting edge (Ks) of the secondary cutting edge (4) is less than 55°, **characterized in that** a rake angle (γ₆₀₂) of the main cutting edge (6), measured at a radially outermost point of the main cutting edge (6) and in the tool orthogonal plane (P_{O2}), which extends through this point, is negative with a value of greater than or equal to 25°.

2. Chipping tool according to Claim 1, **characterized in that** a transition region (5) is provided between the main cutting edge (6) and the secondary cutting edge (4) .

3. Chipping tool according to Claim 2, **characterized in that** the transition region (5) is formed in an arcuate manner, in particular in the form of a circular arc.

4. Chipping tool according to Claim 2, **characterized in that** the transition region (5) is a chamfer.

5. Chipping tool according to one of the preceding claims, **characterized in that** the width (B) of the main cutting edge (6) at the radially outermost point of the main cutting edge (6) tends towards zero.

6. Chipping tool according to one of the preceding claims, **characterized in that** each cutting element (13) in the main body (1) is assigned a chip gullet (7) that extends from the region of the secondary cutting edge (4) to the region of the main cutting edge (6) continuously in a diagonal line from the end side radially on the inside to radially on the outside, and emerges at the circumference at a positive angle (δ).

7. Chipping tool according to one of the preceding claims, **characterized in that** the cutting elements (2, 3) consist of a very hard material that is harder than the material of the main body (1).

8. Chipping tool according to Claim 7, **characterized in that** at least the cutting edge formed from the main cutting edge (6), transition region (5) and secondary cutting edge (4) consists of a harder material than the remaining regions of the cutting elements (2, 3).

9. Chipping tool according to Claim 8, **characterized in that** the cutting edge (4, 5, 6) consists of diamond.

## Revendications

1. Outil d'usinage pour le fraisage frontal plan de pièces à usiner, en particulier en bois, en matériaux à base de bois, en matières plastiques ou en métaux non ferreux ainsi qu'en matériaux de construction légers et en matériaux composites de ces matériaux, comportant un corps de base (1) mobile en rotation autour d'un axe de rotation (D) et au moins une rangée de tranchants (S₁) disposée sur une périphérie du corps de base (1) et comportant au moins deux éléments de coupe (2, 3) disposés sous un angle (λ) par rapport à l'axe de rotation (D) et ayant un tranchant auxiliaire (4) côté frontal et un tranchant principal (6) côté périphérie, dans lequel un angle de bec (β₄) du tranchant auxiliaire (4) dans un plan perpendiculaire à l'arête de coupe (Ks) du tranchant auxiliaire (4) est inférieur à 55°, **caractérisé en ce qu'**un angle d'attaque (y₆₀₂) du tranchant principal (6), mesuré à un point radialement le plus extérieur du tranchant principal (6) et dans le plan orthogonal (P_{O2}) de l'outil, passant par ledit point, est négatif avec une valeur supérieure ou égale à 25°.

2. Outil d'usinage selon la revendication 1, **caractérisé en ce que** une zone de transition (5) est prévue entre le tranchant principal (6) et le tranchant auxiliaire (4).

3. Outil d'usinage selon la revendication 2, **caractérisé en ce que** la zone de transition (5) est réalisée en forme d'arc, en particulier en forme d'arc de cercle.

4. Outil d'usinage selon la revendication 2, **caractérisé en ce que** la zone de transition (5) est un chanfrein.

5. Outil d'usinage selon l'une des revendications précédentes, **caractérisé en ce que** la largeur (B) du tranchant principal (6) tend vers zéro au point radialement le plus extérieur du tranchant principal (6).

6. Outil d'usinage selon l'une des revendications précédentes, **caractérisé en ce que** un espace à copeaux (7) est associé à chaque élément de coupe (13) dans le corps de base (1), qui s'étend depuis la zone du tranchant auxiliaire (4) jusqu'à la zone du tranchant principal (6) en continu en une ligne oblique depuis le côté frontal radialement intérieur vers le côté radialement extérieur et qui sort du côté périphérie sous un angle positif (δ).

7. Outil d'usinage selon l'une des revendications précédentes, **caractérisé en ce que** les éléments de coupe (2, 3) sont constitués en un matériau hautement dur qui est plus dur que le matériau du corps de base (1).

8. Outil d'usinage selon la revendication 7, **caractérisé en ce que** au moins l'arête de coupe formée par le tranchant principal (6), la zone de transition (5) et le tranchant auxiliaire (4) est constituée en un matériau plus dur que celui des autres zones des éléments de coupe (2, 3).

9. Outil d'usinage selon la revendication 8, **caractérisé en ce que** l'arête de coupe (4, 5, 6) est constituée en diamant.
